# EUROPEAN PATENT APPLICATION

(11) **EP 2 199 022 A1**
(43) Date of publication of application: **23.06.2010**
(21) Application number: 08839902.7
(22) Date of filing: 08.10.2008
(51) Int. Cl.: B24B 49/16, B23Q 5/58, B24B 33/06, B24B 41/04

(54) **WORKING TOOL PROTECTING DEVICE FOR MACHINE TOOL, AND HONING MACHINE**

(30) Priority: 15.10.2007 JP 2007268365
(71) Applicant: Nissin Manufacturing Co., Ltd., Mineyama-cho Kyotango-shi Kyoto 627-0037 (JP)
(72) Inventor: TOMITA, Yasuo, Kyotango-shi Kyoto 627-0037 (JP); IWAI, Tetsuo, Kyotango-shi Kyoto 627-0037 (JP)
(74) Representative: Whalley, Kevin
(86) International application number: PCT/JP2008/068693
(87) International publication number: WO 2009/051150

(57) **Abstract**

This is to present a protecting device for processing tool of machine tool used in a machine tool of a type of machining such as grinding and cutting a work by rotating a processing tool mounted on a rotary spindle, for protecting the processing tool by preventing from damage or breakage due to excessive torque load.

In a honing machine, for example, a magnetic coupling device (25) for transmitting the rotating force of a servo motor (16) to a rotary spindle (2) by magnetic action is provided between the rotary spindle (2) on which a honing tool (1) as processing tool is mounted and the servo motor (16) of a spindle rotation driving part (3) for rotating the rotary spindle (2), and the magnetic transmission torque of the magnetic coupling device (25) for transmitting the rotating force is set smaller than a specified torque load applied to the honing tool (1) (for example, breakage torque of honing tool (1)). Accordingly, damage or breakage of the honing tool (1) by excessive torque load can be prevented effectively.

## Description

### TECHNICAL FIELD

The present invention relates to a protecting device for processing tool of machine tool and a honing machine, and more particularly to a protecting technique of a processing tool for protecting a processing tool to prevent from damage or breakage in a machine tool of a type of machining such as grinding and cutting a workpiece by rotating a processing tool mounted on a rotary spindle, such as a honing tool of a honing machine.

### BACKGROUND ART

Honing process is known as one of the processing methods of machining the inner circumferential surface of a workpiece (or a work) to a mirror-smooth finished surface. In this honing process, a honing tool having a grindstone and a work are placed in a relatively floating state, and rotating motion and reciprocating motion are applied to the honing tool, and the work inner circumferential surface is finished precisely by extension of the grindstone of the honing tool by spring elastic force or the like.

A conventional honing machine is provided with a structure for protecting the machine itself, but not provided with a device for protecting the honing tool or the processing tool, and is accompanied by i) defects of the work (for example, the work hole diameter smaller than specified, pre-processing precision out of the standard), ii) biting due to clogging of the grindstone, or iii) control program errors (human errors), and the grindstone of the honing tool may be caught in the work, or an excessive torque load may applied to the honing tool.

In this case, when the honing tool is relatively large in diameter, abnormality is known by biting of the grindstone, but when the diameter is small, the honing tool may be broken because its strength is weaker than the torque load.

However, the honing tool is not only expensive relatively, but also difficult in replacing and handling of parts, and it is time-consuming to repair the device, and its improvement has been demanded.

Such problems are not limited to the honing machine, but are commonly known in other machine tools for machining such as grinding and cutting the work by rotating the processing tool mounted on the rotary spindle, such as drilling machine and boring machine.

As far as the present applicant is informed, there is no prior art relating to such problems or improvement.

The present invention is devised in the light of the problems of the background art, and it is hence an object thereof to present a protecting device of a processing tool for protecting a processing tool to prevent from damage or breakage due to excessive torque load in a machine tool of a type of machining such as grinding and cutting a work by rotating a processing tool mounted on a rotary spindle.

It is other object of the invention to present a honing machine having such protecting device for processing tool.

### DISCLOSURE OF THE INVENTION

To achieve the object, the protecting device for processing tool of the present invention is used in a machine tool of a type of machining such as grinding and cutting a work by rotating a processing tool mounted on a rotary spindle, for protecting the processing tool by preventing from damage or breakage, in which magnetic coupling means for transmitting a rotating force of a rotation driving source to the rotary spindle by magnetic action is disposed between the rotary spindle and the rotation driving source for rotating this rotary spindle, and the magnetic transmission torque for transmitting the rotating force of the magnetic coupling means is set smaller than the specified torque load applied to the honing tool.

The following configurations may be considered as preferred embodiments.
(1) The specified torque load is set smaller than the breakage torque for breaking the honing tool.
(2) The magnetic coupling means is formed in a shape of annular magnet coupling coaxially disposed on the rotary spindle, and this annular magnet coupling has a driving side magnet ring member driven by and coupled to the rotation driving source side, and a driven side magnet ring member coupled to the rotary spindle side integrally in the rotating direction, and both magnet ring members are disposed parallel and concentrically opposite to each other without contacting with the annular magnet surface, and the magnetic transmission torque is set by a magnetic action gap formed between the two annular magnet surfaces.
(3) The driving side and driven side magnet ring members are movable relatively in the axial direction of the rotary spindle, and the magnitude of the magnetic action gap between the annular magnet surfaces is changed, and the magnetic transmission torque is adjusted.
(4) Further, gap adjusting means is provided for adjusting the magnitude of the magnetic action gap by moving the driving side and driven side magnet ring members relatively in the axial direction to the rotary spindle, and this gap adjusting means has moving means for moving either one of the driving side and driven side magnet ring members in the axial direction of the rotary spindle, and gap control means for controlling this moving means, and this gap control means is designed to control the moving means so that the magnetic transmission torque may be adjusted corresponding to the rotating speed of the rotary spindle.
(5) The gap control means is configured to control the moving means so that the magnetic transmission torque may be a specified starting torque value until the rotary spindle reaches a specified rotating speed after starting from the stopped state, and that the magnetic transmission torque may be a specified processing torque when the rotating speed of the rotary spindle has reached the specified rotating speed.
(6) The moving means has a feed screw mechanism coupled to either one of the driving side and driven side magnet ring members, and a rotation driving source for rotating and driving this feed screw mechanism, and a nut member of this feed screw mechanism is coupled and fixed to either one of the driving side and driven side magnet ring members, and a screw member for moving back and forth this nut member is disposed parallel to the axial line of the rotary spindle.
(7) The driving side and driven side magnet ring members have annular permanent magnets disposed at opposite sides of the ring member main body, so that the annular magnet surface is formed.
(8) The driving side and driven side magnet ring members have at least one annular magnet row composed of permanent magnets disposed at equal intervals in the circumferential direction, at opposite sides of the ring member main body, and the annular magnet surface is formed of this annular magnet row.
(9) A plurality of annular magnet rows different in array diameter are disposed concentrically on the opposite sides of the ring member main body.

The honing machine of the present invention includes a rotary spindle movable reciprocally in the axial line direction on the inner circumference of a work and supported rotatably about the axial line, spindle rotating means for rotating and driving the rotary spindle about the axial line, spindle reciprocal driving means for moving the rotary spindle reciprocally in the axial line direction on the inner circumference, a honing tool disposed at the leading end of the rotary spindle and having an expanding and contracting honing grindstone having a grinding surface along the inner circumference, grindstone feeding means for applying a specified feeding operation on the honing grindstone of this honing tool, honing tool protecting means disposed in a driving transmission route of the rotary spindle and the spindle rotating means, for protecting the honing tool by preventing from damage or breakage, and control means for controlling automatically by mutually interlocking the motions of the spindle rotating means, spindle reciprocal driving means, and grindstone feeding means, in which the toning tool protecting means is composed of the protecting device for processing tool of the present invention described above.

### BRIEF DESCRIPTION OF THE DRAWINGS

Fig. 1 is a front view showing a partial section of outline of honing machine in preferred embodiment 1 of the present invention.
Fig. 2 is a front view showing a partially magnified section of honing tool protecting part of the honing machine.
Fig. 3 is a perspective view of magnet ring member of the honing tool protecting part.
Fig. 4 is a magnified front sectional view showing a processing state of work inner circumference by a honing grindstone of the honing machine.
Fig. 5 is a perspective view of magnet ring member of honing tool protecting part of honing machine in preferred embodiment 2 of the present invention.
Fig. 6 is a plan view of array outline of permanent magnets on an annular magnet surface of the magnet ring member.
Fig. 7 is a front view showing a partially magnified section of honing tool protecting part of honing machine in preferred embodiment 3 of the present invention.
Fig. 8 is a block diagram of configuration of gap control part of the honing tool protecting part.

### DETAILED DESCRIPTION OF THE PREFERRED EMBODIMENTS

Preferred embodiments of the present invention are specifically described below while referring to the accompanying drawings.

### Preferred Embodiment 1

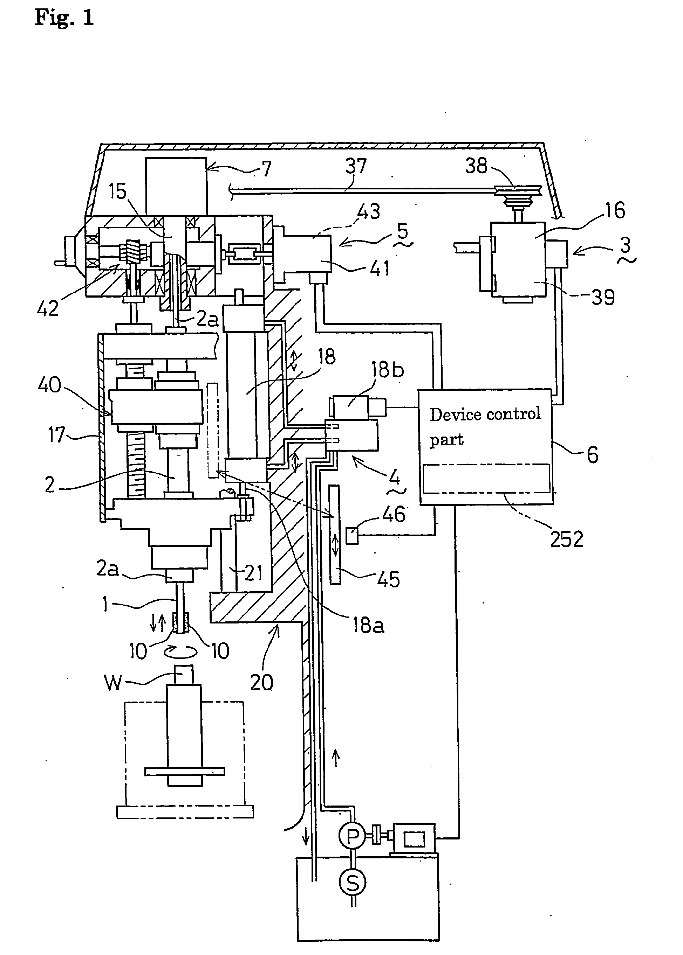

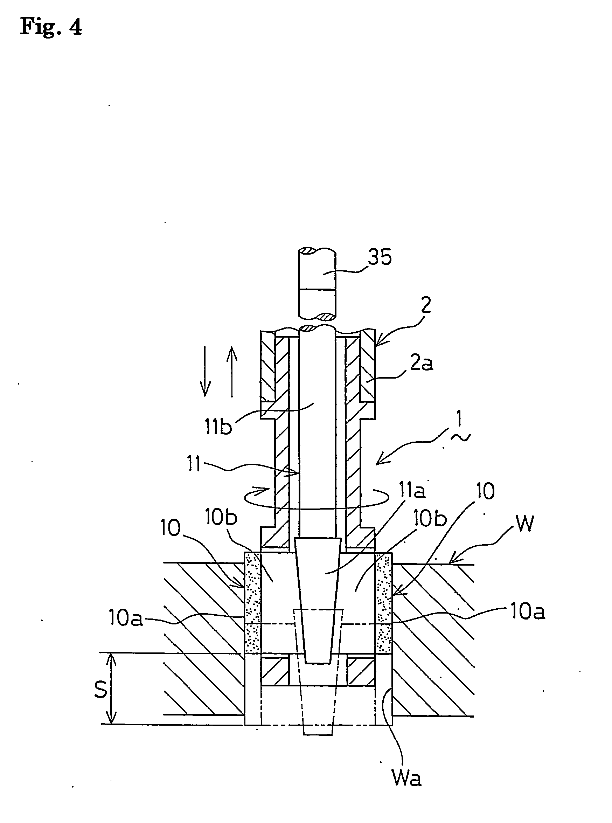

A honing machine of the present invention is shown in Fig. 1, and this honing machine is specifically a vertical type as shown in Fig. 4, for processing the inner circumference Wa of a cylindrical machining hole of a work W, and essentially includes a rotary spindle 2 having a honing tool 1 at the leading end, a spindle rotating and driving part (spindle rotating means) 3, a spindle reciprocal driving part (spindle reciprocating means) 4, a grindstone feeding part (grindstone feeding means) 5, and a device control part (control means) 6, and a honing tool protecting part (honing tool protecting means, processing tool protecting device) 7 is disposed in the driving transmission route of the rotary spindle 2 and the spindle rotating and driving part 3.

The honing tool (so-called honing head) 1 is provided detachably at the leading end of the rotary spindle 2, that is, at a lower end 2a.

The inside of the honing tool 1 incorporates, as shown in Fig. 4, a plurality of honing grindstones 10, 10, ..., disposed so as to expand and contract in the radial direction, a cone rod 11 for expanding these honing grindstones, and a reset spring (not shown) for resetting the honing grindstones 10, 10, ....

Each honing grindstone 10 has a grinding surface 10a along the inner circumference Wa of the work W. The cone rod 11 is provided movably in the vertical direction in the honing tool 1, and its leading end wedge 11a is a grindstone expanding part for pressing a grindstone stand 10b of each honing grindstone 10, and its upper part, that is, a base rod 11b is coupled to a grindstone expanding rod 35 described below. Although not shown in the drawing, the honing grindstones 10, 10, ... are elastically forced always in the contracting and closing direction by the reset spring.

The honing grindstones 10, 10, ... are expanded and opened by the downward motion of the cone rod 11, and are contracted and closed by the reset spring by the upward motion of the cone rod 11.

The rotary spindle 2 has the honing tool 1 provided at its lower end, and is connected to the spindle rotating and driving part 3 including a spindle drive shaft 15 and servo motor (rotation driving source) 16, and the spindle reciprocal driving part 4 including a slide main body 17 and a hydraulic cylinder 18.

That is, the rotary spindle 2 is rotatably supported on the slide main body 17, and this slide main body 17 is elevatably mounted on a guide rod or a rail 21 extending in the vertical direction of a machine body 20, and is coupled to a piston rod 18a of a hydraulic cylinder 18 mounted on the machine body 20. As the piston rod 18a of the hydraulic cylinder 18 is elevated and lowered, the rotary spindle 2, that is, the honing tool 1 is elevated and lowered by way of the slide main body 17.

The upper end part 2a of the rotary spindle 2 is spline-fitted to a spindle drive shaft 15 rotatably provided in a head part 20a of the machine body 20, and is coupled to this spindle drive shaft 15 movably relatively to the vertical direction (axial line direction) and rotatably integrally.

More specifically, the upper end part 2a of the rotary spindle 2 is supported by the head part 20a of the machine body 20 by way of a rotary spline device 22, and is coaxially connected to the spindle drive shaft 15.

By the supporting action of the rotary spline device 22, the rotary spindle 2 is movable and rotatable relatively in the vertical direction (axial line direction) on the machine body 20, and is engaged and connected to the spindle drive shaft 15 rotatably supported on the head par 20a by way of the rotary spline device 22 movably relatively in the vertical direction and integrally in the rotating direction. The rotary spline device 22 of the preferred embodiment may be realized, for example, by Rotary Ball Spline (a registered trademark). Hence, the rotary spindle 2 integrally connected with the spindle drive shaft 15 is movable and rotatable relatively in the vertical direction (axial line direction) on the machine body 20.

The upper end part of the spindle drive shaft 15 rotating integrally with the rotary spindle 2 is provided with the honing tool protecting part 7, and through this honing tool protecting part 7, the spindle drive shaft 15 is coupled and driven by the servo motor 16.

The honing tool protecting part 7 is intended to protect the honing tool 1 by preventing from damage or breakage, and in the preferred embodiment, as shown above, it is provided in the spindle drive shaft 15.

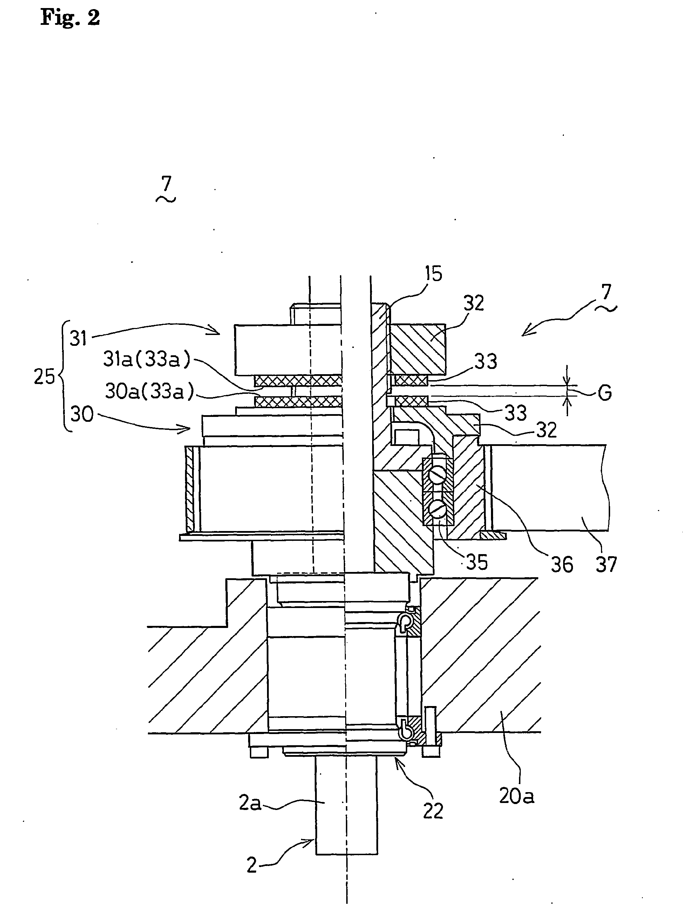

A specific structure of the honing tool protecting part 7 is shown in Fig. 2, in which a magnetic coupling device (magnetic coupling means) 25 is formed as an essential component.

The magnetic coupling device 25 is designed to transmit the rotating force of the servo motor 16 of the spindle reciprocal driving part 4 as the spindle rotation driving source to the rotary spindle 2 by magnetic action, and specifically it is formed as an annular magnet coupling disposed coaxially on the rotary spindle 2.

The annular magnet coupling (magnetic coupling device) 25 of the preferred embodiment is provided on the spindle drive shaft 15 of the spindle reciprocating drive part 4 as mentioned above, and includes a driving side magnet ring member 30 driven by and coupled to the servo motor 16, and a driven side magnet ring member 31 coupled to the rotary spindle 2 integrally in the rotating direction.

The pair of magnet ring members 30, 31 are disposed oppositely and concentrically in parallel without contacting with annular magnet surfaces 30a, 31a, and by magnetic transmission torque T_{M} generated between the annular magnet surfaces 30a, 31a, the rotating force of the driving side magnet ring member 30 is transmitted to the driven side magnet ring member 31.

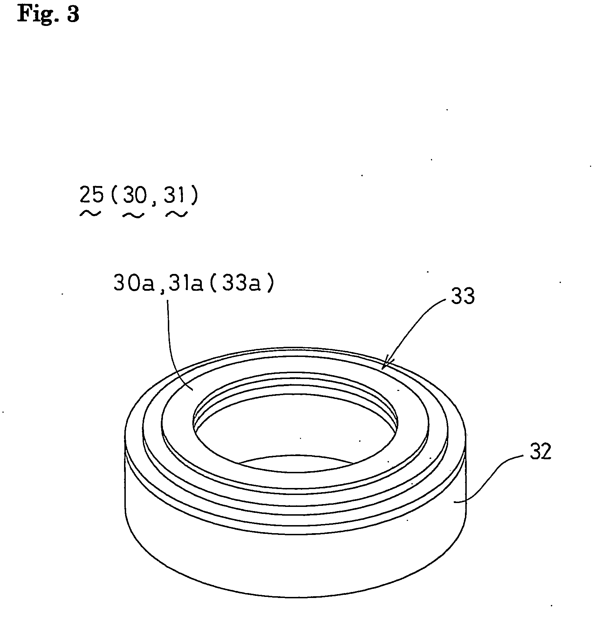

Specifically, the driving side and driven side magnet ring members 30, 31 are formed as shown in Fig. 3, in which an annular permanent magnet 33 is buried and integrally fixed at the opposite side of the ring member main body 32 (the upper side in Fig. 3), and an annular flat plane 33a of this annular permanent magnet 33 forms annular magnet surfaces 30a, 31a of the driving side and driven side magnet ring members 30, 31.

The driving side magnet ring member 30 is rotatably supported on the spindle drive shaft 15 by means of a bearing 35 as shown in Fig. 2, and is coupled integrally with a transmission pulley 36 coaxially, and this transmission pulley 36 is coupled to a transmission pulley 38 mounted on the motor shaft of the servo motor 16 by way of a transmission belt 37. On the other hand, the driven side magnet ring member 31 is screwed and fixed on the spindle drive shaft 15 as shown in Fig. 2 so as to free to move back and forth the axial direction, and is integrally coupled to the rotary spindle 2 integrally in the rotating direction.

The annular magnet surfaces 30a, 31a of the both magnet ring members 30, 31 are disposed in parallel, concentrically and oppositely without making contact, across a specified magnetic action gap G, and by the magnetic action gap G formed between the annular magnet surfaces 30a, 31a, the capability of transmitting the rotating force of the magnetic coupling device 25, that is, the magnetic transmission torque T_{M} is determined.

In this relation, the driving side and driven side magnet ring members 30, 31 are movable relatively in the axial direction of the rotary spindle 2, and the magnitude of the magnetic action gap G between the annular magnet surfaces 30a, 31a is varied, and the magnetic transmission torque T_{M} is adjusted.

In the illustrated preferred embodiment, as mentioned above, since the driven side magnet ring member 31 is screwed and fixed on the spindle drive shaft 15 so as to be movable back and forth in the axial direction, the driven side magnet ring member 31 is moved in the axial direction to the spindle drive shaft 15, and the magnetic action gap G is adjusted to a proper interval, so that the magnitude of the magnetic transmission torque T_{M} is set to a specified value.

Specifically, the magnetic transmission torque T_{M} is set smaller than the specified torque load applied to the honing tool 1, and this specified torque load is set smaller than a breakage torque at least enough for breaking down the honing tool 1, preferably smaller than the allowable torque of the honing tool 1. In the illustrated preferred embodiment, the specified torque load is set smaller than the allowable torque of the honing tool 1.

By rotation and driving of the servo motor 16, when the driving side magnet ring member 30 is rotated by way of the transmission pulley 38, transmission belt 37, and transmission pulley 36, this rotating force is transmitted to the driven side magnet ring member 31 by the action (magnetic action) of the magnetic transmission torque T_{M}, and the spindle drive shaft 15 which is integral with it is rotated, and hence the rotary spindle 2, that is, the honing tool 1 is rotated and driven.

On the other hand, when the torque load applied to the honing tool 1 is more than the allowable torque, and exceeds the magnetic transmission torque T_{M}, slip occurs in the relative rotation or magnetic action between the driving side magnet ring member 30 and the driven side magnet ring member 31, and the rotating force of the driving side magnet ring member 30 is not transmitted to the driven side magnet ring member 31, but is cut off.

The rotating speed of the servo motor 16 for driving and controlling the rotary motion of the honing tool 1 is detected by an incorporated rotary encoder or position detector 39.

The grindstone feeding part 5 is for applying a feeding operation of the honing grindstones 10, 10, ..., and includes the cone rod 11 (Fig. 4) of the honing tool 1, a feeding drive part 40 for moving up and down the cone rod 11, and a servo motor 41 as the driving source.

The feeding drive part 40 has a known structure, and is coupled to the motor shaft of the servo motor 41 by way of a rotation transmission mechanism 42 provided in the head part 20a of the machine body 20.

By rotation and driving of the servo motor 41 in a positive direction, the feeding drive part 40 is driven, and the cone rod 11 in the honing tool 1 is moved downward, and the honing grindstones 10, 10, ... are expanded and operated. By rotation and driving of the servo motor 41 in a reverse direction, the cone rod 11 is moved upward, and the honing grindstones 10, 10, ... are contracted and closed (reset) by the reset spring in the honing tool 1.

The rotation amount of the servo motor 41 for driving and controlling the expanding and contracting amount of the honing grindstones 10, 10, ... is detected by an incorporated rotary encoder or position detector 43.

The device control part 6 is to control the operation of the driving parts of the honing machine automatically by interlocking each other, and is specifically composed of a microcomputer having CPU, ROM, RAM, I/O port and others.

A processing program for executing honing process is stored the device control part 6.

The device control part 6 includes the servo motor 16, hydraulic control valve 18b of hydraulic cylinder 18, servo motor 41, and position detectors 39, 43, and also a position detector 46 for detecting the position of the slide main body 17 from the scale 45 provided in the slide main body 17, and other driving parts are connected electrically, and the actual value information obtained from them is compared with preset values, and the operation of the drive parts 3, 4 and 5 is driven and controlled on the basis of the arithmetic operations.

In the honing machine having such configuration, the drive parts 3, 4, 5 are automatically controlled in mutual relation by means of the device control part 6, and the honing tool 1 machines the inner circumference of the hole of the work W held on a work holding jig 50 by uniform honing process at specific amount or specific dimension, that is, specific feeding or cutting amount in the entire honing region (that is, stroke width S in Fig. 4).

Incidentally, due to defect of work W (for example, diameter of hole inside diameter of work W smaller than specified, or pre-processing precision out of standard, etc.), or biting due to clogging of honing grindstones 10, 10, ..., or control program error, the honing grindstones 10, 10, ... of the honing tool 1 may be caught in the work W, and an excessive torque load may be applied to the honing tool 1.

In such a case, when the torque load applied to the honing tool 1 exceeds the magnetic transmission torque T_{M} of the magnetic coupling device 25 in the honing tool protecting part 7, as mentioned above, a relative rotation occurs between the driving side magnet ring member 30 and the driven side magnet ring member 31, and the rotating force of the driving side magnet ring member 30 is not transmitted to the driven side magnet ring member 31, and is cut off and invalid. As a result, damage or breakage of the honing tool 1 may be prevented, and it is securely protected.

As mentioned above, in the honing tool protecting part 7 in the honing machine of the illustrated preferred embodiment, between the rotary spindle 2 on which the honing tool 1 is mounted, and the servo motor 16 of the spindle rotation driving part 3 for rotating the rotary spindle 2, a magnetic coupling device 25 is provided for transmitting the rotating force of the servo motor 16 to the rotary spindle 2 by the magnetic action, and the magnetic transmission torque T_{M} for transmitting the rotating force of the magnetic coupling device 25 is set smaller than the specified torque load applied to the honing tool 1, so that damage or breakage of the honing tool 1 due to excessive torque load can be securely prevented.

The magnetic coupling device 25 is formed as an annular magnetic coupling having the driving side magnet ring member 30 driven by and coupled to the servo motor 16 as the rotation driving source, and the driven side magnet ring member 31 coupled integrally to the rotary spindle 2 in the rotating direction, and the annular magnet surfaces 30a, 31a of the two magnet ring members 30, 31 are disposed oppositely in parallel and concentrically without making contact, and by the magnetic action gap G formed between the two annular magnet surfaces 30a, 31a, the magnetic transmission torque T_{M} is determined, and the magnetic coupling device 25 of simple structure and low in failure rate can be presented.

The magnetic coupling device 25 of such configuration can be assembled into an existing machine tool easily by modifying only slightly, and it is versatile and economical.

### Preferred Embodiment 2

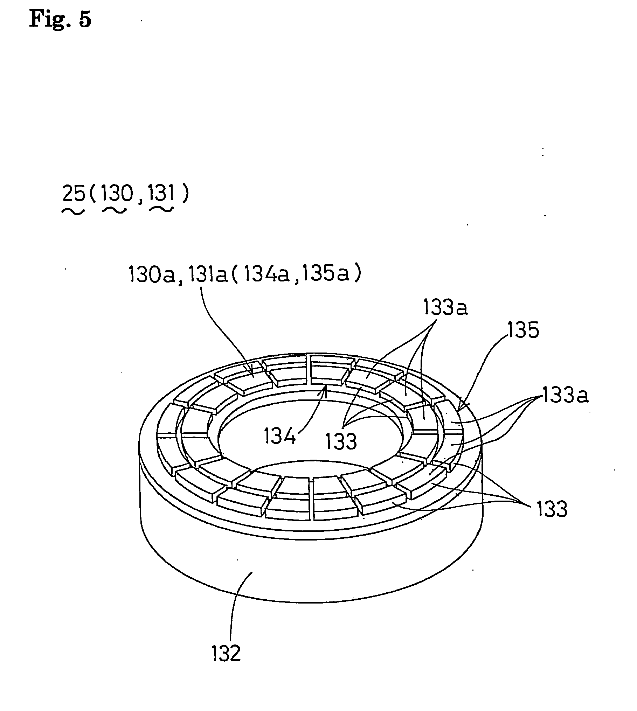

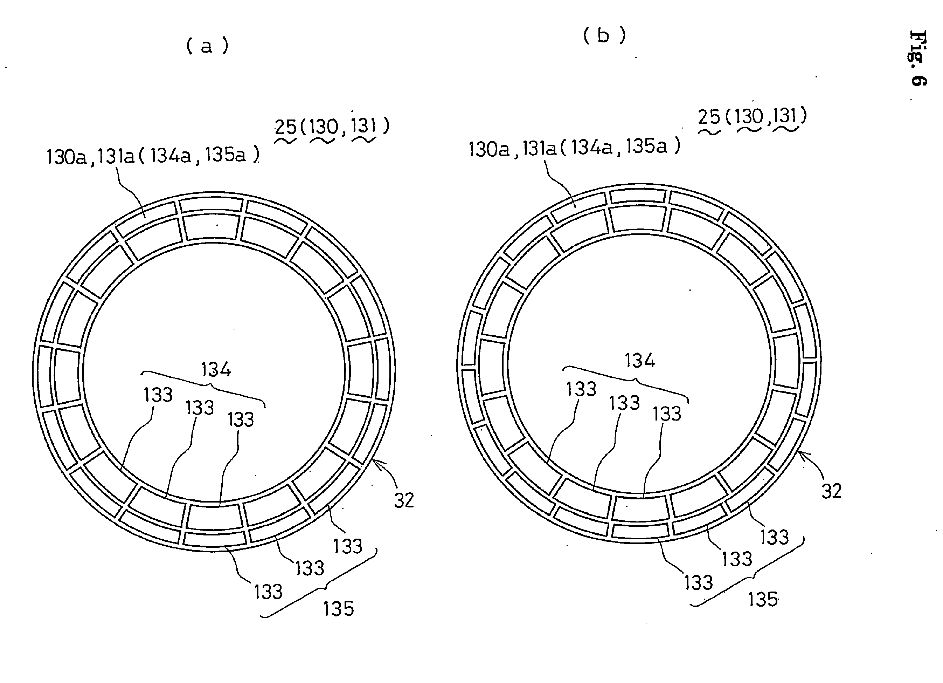

This preferred embodiment is shown in Fig. 5 and Fig. 6, in which the specific configuration of the magnet coupling (magnetic coupling device) 25 in preferred embodiment 1 is slightly modified.

In the annular magnet coupling 25 of the illustrated preferred embodiment, a pair of upper and lower magnet ring members 130, 131 are formed as shown in Fig. 5, in which a plurality of permanent magnets 133, 133, ... are buried and fixed in opposite sides of a ring member main body 132 (upside in Fig. 5), integrally at uniform intervals in the circumferential direction, forming at least one annular magnet row, and in the illustrated example, a plurality of annular magnet rows different in diameter of array, specifically, two annular magnet rows 134, 135 are disposed concentrically.

Annular flat planes 134a, 135a of the annular magnet rows 134, 135 respectively form annular magnet surfaces 130a, 131a of driving side and driven side magnet ring members 130, 131.

The layout of permanent magnets 133, 133, ... and 133, 133, ... of the two annular magnet rows 134, 135 may be disposed at same phase angle as shown in Fig. 6 (a), or at slightly deviated phase angle as shown in Fig. 6 (b).

In the magnet coupling 25 thus configured, when the torque load applied to the honing tool 1 exceeds the magnetic transmission torque T_{M}, slip in relative rotation, that is, magnetic action occurring between the driving side magnet ring member 30 and the driven side magnet ring member 31 is divided into small portions and is smooth as compared with the case of forming annular magnet surfaces 30a, 31a by the annular permanent magnet 33 as in preferred embodiment 1, so that the torque load to the honing tool 1 is lessened (shortened in time), which contributes to effective protection of the honing tool 1.

Such slip effect is smaller as the number of divisions of permanent magnet in annular magnet surfaces 130a, 131a is larger, that is, the number of divided and formed permanent magnets 133, 133, ... is larger, and the torque load on the honing tool 1 is smaller (shorter in time), but the manufacturing cost and the device cost are higher, to the contrary, and the number of divisions may be determined appropriately depending on the purpose such as lessening effect of demanded torque load.

Other structure and action are same as in preferred embodiment 1.

### Preferred Embodiment 3

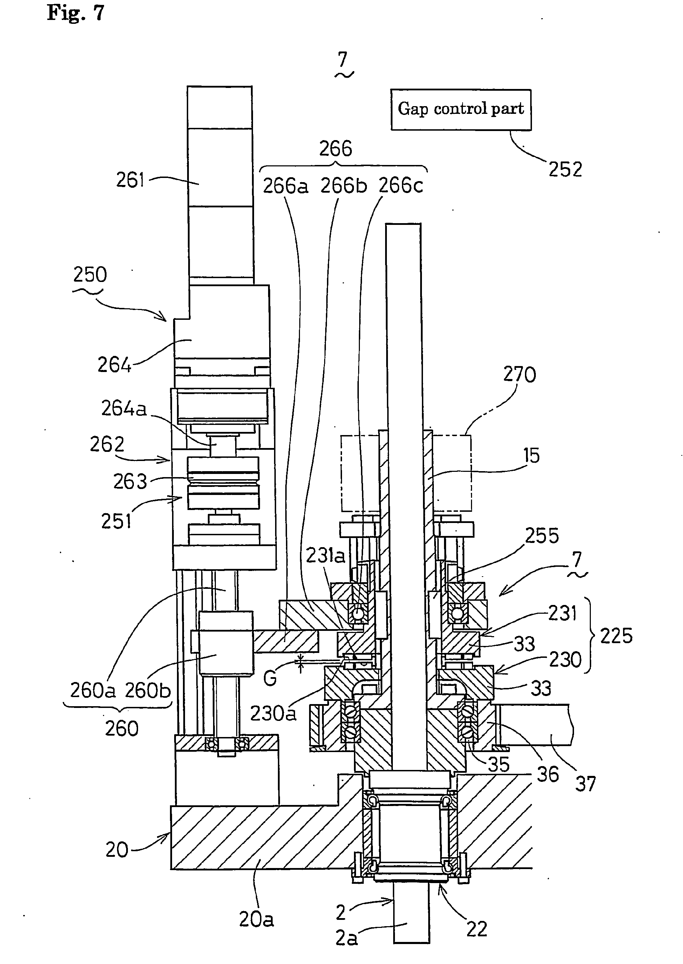

This preferred embodiment is shown in Fig. 7, and is slightly modified in the configuration of the honing tool protecting part 7 in preferred embodiment 1.

More specifically, in the honing tool protecting part 7 in preferred embodiment 1, the magnetic action gap G between the annular magnet surfaces 30a, 31a of the driving side magnet ring member 30 and the driven side magnet ring member 31 is adjusted manually and is fixed, whereas in the honing tool protecting part 7 of the preferred embodiment, the magnetic action gap G is adjusted automatically and is variable.

That is, the honing tool protecting part 7 is mainly composed of a magnetic coupling device (magnetic coupling means) 225, and this magnetic coupling device 225 is, same as in preferred embodiment 1, formed as an annular magnet coupling provided on the spindle drive shaft 15 of the spindle reciprocal driving part 4.

The annular magnet coupling ring 225 includes a driving side magnet ring member 230 driven by and coupled to the servo motor 16, and a driven side magnet ring member 231 coupled to the rotary spindle 2 integrally in the rotating direction, and also includes a gap adjusting part (gap adjusting means) 250 for automatically adjusting the magnetic action gap G between the annular magnet surfaces 230a, 231a of these magnet ring members 230, 231.

This gap adjusting part 250 is designed to move the both magnet ring members 230, 231 relatively in the axial direction to the rotary spindle 2, and more specifically, either one of the driving side and driven side magnet ring members 230, 231 is moved in the axial direction to the rotary spindle 2.

The gap adjusting part 250 in the preferred embodiment is essentially composed of a ring member moving part (moving means) 251 for moving the driven side magnet ring member 231 in the axial direction of the rotary spindle 2, and a gap control part (gap control means) 252 for controlling this ring member moving means 251.

For this purpose, the both magnet ring members 230, 231 are disposed oppositely in parallel concentrically without allowing contact between the annular magnet surfaces 230a, 231a, and by the magnetic transmission torque T_{M} caused between the both annular magnet surfaces 230a, 231a, the rotating force of the driving side magnet ring member 230 is transmitted to the driven side magnet ring member 231, and the driven side magnet ring member 231 is slidable in the axial direction of the rotary spindle 2.

Specifically, the driving side magnet ring member 230 is supported rotatably by a bearing 35 on the spindle drive shaft 15 same as in preferred embodiment 1, and is integrally coupled with the transmission pulley 36 concentrically, and this transmission pulley 36 is coupled to the transmission pulley 38 mounted on the motor shaft of the servo motor 16 by way of the transmission belt 37.

On the other hand, the driven side magnet ring member 231 is supported by key-fitting 255 on the spindle drive shaft 15, and rotates integrally with the spindle drive shaft 15, slidably in the axial direction to the spindle drive shaft 15. The driven side magnet ring member 231 is coupled to the ring member moving part 251.

The specific configuration of the annular magnet surfaces 30a, 31a of the driving side and driven side magnet ring members 230, 231 is same as in the annular magnet surfaces 30a, 31a (see Fig. 3) of preferred embodiment 1, or the annular magnet surfaces 130a, 131a (see Fig. 5 and Fig. 6) of preferred embodiment 2, and the illustrated example is similar to the configuration of preferred embodiment 2.

The ring member moving part 251 essentially includes a feed screw mechanism 260 coupled to the driven side magnet ring member 231, and a drive motor 261 as rotation driving source for rotating and driving this feed screw mechanism 260. These components 260, 261 are disposed at adjacent positions on the rotary spindle 2 in the machine body 20.

The feed screw mechanism 260 is specifically a ball screw, and a screw member 260a is supported on an upright support frame 262 provided on the head part 20a of the machine body 20 rotatably in parallel to the axial line of the rotary spindle 2, that is, in perpendicular state, and its bas end part, that is, the upper end part is coaxially connected to a drive shaft 264a of a reduction gear 264 by way of a coupling 263, and this reduction gear 264 is driven by and coupled to the motor shaft (not shown) of the drive motor 261.

A nut member 260b is screwed and supported on the screw member 260a so as to be movable freely in the vertical direction, and this nut member 260b is coupled to the driven side magnet ring member 231 by a coupling means 266.

Specifically, the coupling mechanism 266 is composed of a coupling member 266a and a support member 266b. The coupling member 266a has its one end connected and fixed to the nut member 260b in horizontal state, and other end connected and fixed to the support member 266b. This support member 266b is integrally provided on the outer circumference of the driven side magnet ring member231 rotatably and integrally in the axial direction by way of a bearing 266c.

By rotation and driving of the drive motor 261, the screw member 260a of the feed screw mechanism 260 rotates normally or rotates oppositely at specified speed by way of the reduction gear 264, and the nut member 260b on the screw member 260a ascends or descends, and thereby the driven side magnet ring member 231 integrally connected to the nut member 260a through a coupling mechanism 266 moves up or down the spindle drive shaft 15 so as to depart from or approach the driving side magnet ring member 230, so that the magnetic action gap G between the annular magnet surfaces 230a, 231a of the two magnet ring members 230, 231 is adjusted to be narrow or wide, and the magnetic transmission torque T_{M} generated between the annular magnet surfaces 30a, 31a is adjusted.

The gap control part 252 controls the ring member moving part 251 so as to adjust the magnetic transmission torque T_{M} automatically depending on the rotating speed of the rotary spindle 2, and forms a part of the device control part 6 (see double dot chain line in Fig. 1).

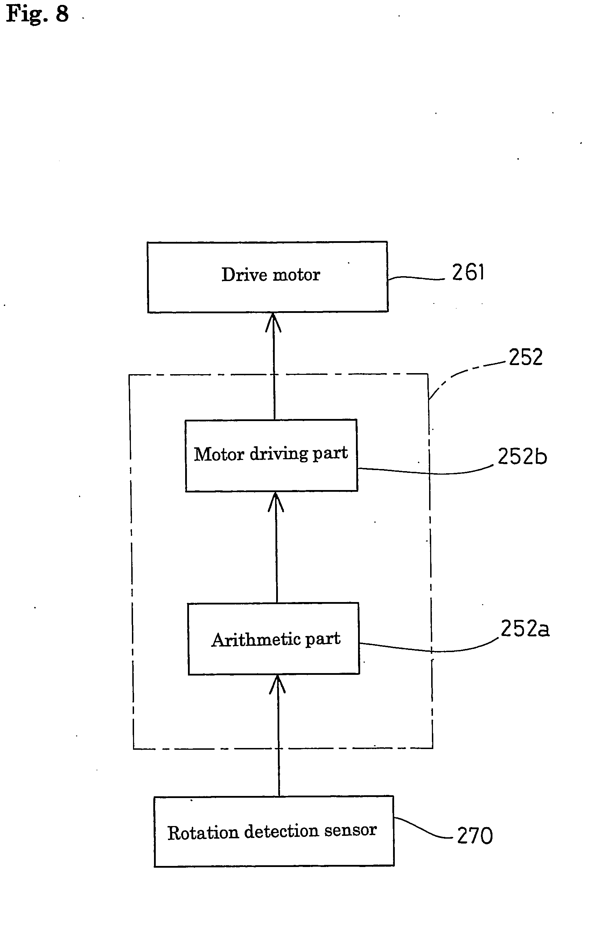

This gap control part 252 is composed of an arithmetic part 252a and a motor drive part 252b as shown in Fig. 8, and a detection signal from a rotation detection sensor 270 such as rotary encoder for detecting the rotating speed of the rotary spindle 2, that is, the spindle drive shaft 15 is put into the arithmetic part 252a, and this arithmetic part 252a comparatively calculates the entered detection value (rotating speed) and the preset value (rotating speed) R, and on the basis of the calculated result, a control signal corresponding to the rotating speed of the rotary spindle 2 detected by the rotation detection sensor 270 is issued to the motor drive part 252b, and a move pulse is sent from the motor drive part 32b to the drive motor 261.

In the illustrated preferred embodiment, the preset value R predetermined in the gap control part 252 is the value corresponding to the rotating speed when the rotary spindle 2 or the honing tool 1 machines the work W, and hence it is designed to control the ring member moving part 251 so that the magnetic transmission torque T_{M} may reach a specified starting torque value until the rotary spindle 2 may reach the specified rotating speed from starting from the stopped state, or that the magnetic transmission torque T_{M} may reach a specified machining torque value when the rotating speed of the rotary spindle 2 reaches the specified rotating speed.

Herein, concerning the starting torque value, in the starting and rotating time of the rotary spindle 2 (until the rotary spindle 2 reaches the maximum rotating speed necessary for machining from zero), a large initial follow-up torque is needed for the rotary motion of the rotary spindle 2 in stopped state to follow up the rotary motion of the servo motor 16 (the rotating speed of the rotary spindle 2 is greater than the follow-up speed when reaching the maximum rotating speed necessary for machining), and this initial follow-up torque is used and set as the starting torque value.

In the honing tool protecting part 7 of the honing machine having such configuration, the gap adjusting part 250 determines the magnetic action gap G smaller between the annular magnetic surfaces 230a, 231a, so that the magnetic transmission torque T_{M} may reach a specified starting torque value until the rotary spindle 2 may reach the specified rotating speed from starting from the stopped state (in the preferred embodiment, the maximum rotating speed necessary for machining), or determines the magnetic transmission torque T_{M} may reach a specified machining torque value when the rotating speed of the rotary spindle 2 reaches the specified rotating speed, and the magnetic action gap G is set, and thereby an appropriate magnetic transmission torque T_{M} depending on the rotating speed of the rotary spindle 2 may be set and controlled.

Thus, in the honing tool protecting part 7 of the preferred embodiment, the magnetic action gap G of the driving side and driven side magnetic ring members 230, 231 is adjusted automatically depending on the rotating speed of the rotary spindle 2, and damage or breakage of the honing tool 1 due to excessive torque load is effectively prevented, same as the effects in preferred embodiment 1, and moreover, as accessory and synergistic effect, the magnetic transmission torque T_{M} can be automatically adjusted to the optimum value depending on the follow-up torque required according to the rotating speed of the rotary spindle 2.

Other structure and action are same as in preferred embodiment 1.

The foregoing preferred embodiments 1 to 3 are best modes for carrying out the present invention, but the present invention is not limited to these preferred embodiments alone, but may changed and modified freely within the true spirit and specified scope.

For example, the components 3, 4, 5, 6, and others of the honing machine may be replaced by other components having same functions.

In the illustrated preferred embodiments 1 to 3, the hydraulic cylinder 18 is used as the driving source of the spindle reciprocal driving part 4 for moving the rotary spindle 2 reciprocally, but a so-called non-hydraulic head may be composed by combining the ball screw device and a drive motor as rotation driving source.

### INDUSTRIAL APPLICABILITY

As described herein, according to the protecting device for processing tool of the present invention, magnetic coupling means for transmitting the rotating force of a rotation driving source to a rotary spindle by magnetic action is provided between the rotary spindle on which the processing tool is mounted and the rotation driving source for rotating this rotary spindle, and the magnetic transmission torque of the magnetic coupling means for transmitting the rotating force is set smaller than the specified torque load applied to the processing tool, so that damage or breakage of the processing tool by excessive torque load can be prevented effectively.

For example, in the honing machine having the protecting device for processing tool, if the grindstone of the honing tool is caught in the work and an excessive torque load is applied to the honing tool due to defect of work, biting by clogging of the grindstone of honing tool or processing tool, or control program error, since the magnetic transmission torque by the magnetic coupling means is set to a smaller value than the breakage tool of the honing tool, before the honing tool is broken due to excessive torque load, the rotation transmission force of the magnetic coupling means is made invalid, and damage or breakage of the honing tool can be effectively prevented.

The magnetic coupling means is formed as an annular magnet coupling having a driving side magnet ring member driven by and coupled to the rotation driving source, and a driven side magnet ring member coupled to the rotary spindle integrally in the rotating direction, and annular magnet surfaces of the both magnet ring members are disposed oppositely in parallel concentrically without making contact, and the magnetic transmission torque is determined by the magnetic action gap formed between the two annular magnet surfaces, and therefore magnetic coupling means of simple structure and low failure rate can be presented.

The magnet coupling having such structure can be assembled in an existing machine tool only by slight modification, and it is versatile and economical.

## Claims

1. A protecting device for processing tool of machine tool used in a machine tool of a type of machining such as grinding and cutting a work by rotating a processing tool mounted on a rotary spindle, for protecting the processing tool by preventing from damage or breakage,
wherein magnetic coupling means for transmitting a rotating force of a rotation driving source to the rotary spindle by magnetic action is disposed between the rotary spindle and the rotation driving source for rotating this rotary spindle, and
the magnetic transmission torque for transmitting the rotating force of the magnetic coupling means is set smaller than the specified torque load applied to the honing tool.

2. The protecting device for processing tool of machine tool of claim 1,
wherein the specified torque load is set smaller than the breakage torque for breaking the honing tool.

3. The protecting device for processing tool of machine tool of claim 1,
wherein the magnetic coupling means is formed in a shape of annular magnet coupling coaxially disposed on the rotary spindle,
this annular magnet coupling has a driving side magnet ring member driven by and coupled to the rotation driving source side, and a driven side magnet ring member coupled to the rotary spindle side integrally in the rotating direction, and
the both magnet ring members are disposed parallel and concentrically opposite to each other without contacting with the annular magnet surface, and the magnetic transmission torque is set by a magnetic action gap formed between the two annular magnet surfaces.

4. The protecting device for processing tool of machine tool of claim 3,
wherein the driving side and driven side magnet ring members are movable relatively in the axial direction of the rotary spindle, and the magnitude of the magnetic action gap between the annular magnet surfaces is changed, and the magnetic transmission torque is adjusted.

5. The protecting device for processing tool of machine tool of claim 4,
wherein gap adjusting means is provided for adjusting the magnitude of the magnetic action gap by moving the driving side and driven side magnet ring members relatively in the axial direction to the rotary spindle,
this gap adjusting means has moving means for moving either one of the driving side and driven side magnet ring members in the axial direction of the rotary spindle, and gap control means for controlling this moving means, and
this gap control means is designed to control the moving means so that the magnetic transmission torque may be adjusted corresponding to the rotating speed of the rotary spindle.

6. The protecting device for processing tool of machine tool of claim 5,
wherein the gap control means is configured to control the moving means so that the magnetic transmission torque may be a specified starting torque value until the rotary spindle reaches a specified rotating speed after starting from the stopped state, and that the magnetic transmission torque may be a specified processing torque when the rotating speed of the rotary spindle has reached the specified rotating speed.

7. The protecting device for processing tool of machine tool of claim 5,
wherein the moving means has a feed screw mechanism coupled to either one of the driving side and driven side magnet ring members, and a rotation driving source for rotating and driving this feed screw mechanism, and
a nut member of this feed screw mechanism is coupled and fixed to either one of the driving side and driven side magnet ring members, and a screw member for moving back and forth this nut member is disposed parallel to the axial line of the rotary spindle.

8. The protecting device for processing tool of machine tool of claim 3,
wherein the driving side and driven side magnet ring members have annular permanent magnets disposed at opposite sides of the ring member main body, so that the annular magnet surface is formed.

9. The protecting device for processing tool of machine tool of claim 3,
wherein the driving side and driven side magnet ring members have at least one annular magnet row composed of permanent magnets disposed at equal intervals in the circumferential direction, at opposite sides of the ring member main body, and the annular magnet surface is formed of this annular magnet row.

10. The protecting device for processing tool of machine tool of claim 9,
wherein a plurality of annular magnet rows different in array diameter are disposed concentrically on the opposite sides of the ring member main body.

11. A honing machine comprising:
a rotary spindle movable reciprocally in the axial line direction of the inner circumference of a work and rotatable about the axial line,
spindle rotating means for rotating and driving the rotary spindle about the axial line,
spindle reciprocal driving means for moving the rotary spindle reciprocally in the axial line direction of the inner circumference,
a honing tool disposed at the leading end of the rotary spindle and having an expanding and contracting honing grindstone having a grinding surface along the inner circumference,
grindstone feeding means for applying a specified feeding operation on the honing grindstone of this honing tool,
honing tool protecting means disposed in a driving transmission route of the rotary spindle and the spindle rotating means, for protecting the honing tool by preventing from damage or breakage, and
control means for controlling automatically by mutually interlocking the motions of the spindle rotating means, spindle reciprocal driving means, and grindstone feeding means,
wherein the honing tool protecting means is composed of the protecting device for processing tool of any one of claims 1 to 10.
